**Europäisches Patentamt**

**European Patent Office**

**Office européen des brevets**

(11) Veröffentlichungsnummer : **0 077 751**
**B1**

(12) **EUROPÄISCHE PATENTSCHRIFT**

(45) Veröffentlichungstag der Patentschrift :
28.08.85

(21) Anmeldenummer : 82730122.7

(22) Anmeldetag : 22.09.82

(51) Int. Cl.⁴ : **H 02 K   5/167, F 16 C 33/10, F 16 C 37/00, F 03 B 11/06**

(54) Selbstpumpendes Spurlager für elektrische Maschinen mit vertikaler Welle, insbesondere für Wasserkraftgeneratoren.

(30) Priorität : 13.10.81 DE 3141059

(43) Veröffentlichungstag der Anmeldung :
27.04.83 Patentblatt 83/17

(45) Bekanntmachung des Hinweises auf die Patenterteilung : 28.08.85 Patentblatt 85/35

(84) Benannte Vertragsstaaten :
AT CH DE FR GB IT LI SE

(56) Entgegenhaltungen :
DE-C-   943 867
GB-A-   571 745

(73) Patentinhaber : **Siemens Aktiengesellschaft**
**Berlin und München Wittelsbacherplatz 2**
**D-8000 München 2 (DE)**

(72) Erfinder : **Pollok, Hans-Jürgen, Dipl.-Ing.**
**Limastrasse 22**
**D-1000 Berlin 37 (DE)**

**Beschreibung**

Die Erfindung betrifft eine selbstpumpendes Spurlager für elektrische Maschinen mit vertikaler Welle, insbesondere für Wasserkraftgeneratoren, bei dem der Ölumlauf durch im umlaufenden Spurring vorgesehene, zumindest angenähert radial verlaufende Bohrungen hervorgerunfen ist, die das Öl aus einem oberhalb des Lagerspaltes radial innen befindlichen Ansaugraum absaugen und in einen in einem stehenden Teil des Spurlagertopfes angeordneten Ringkanal überleiten, von dem aus es Kühlern und danach wieder dem Ölansaugraum zugeführt wird, wobei in dem Spaltz zwischen der äußeren Mantelfläche des Spurringes und dem stehenden Teil mit dem Ringkanal Dichtungsmittel vorgesehen sind.

Ein derartiges selbstpumpendes Spurlager ist aus der GB-A-571 745 bekannt. Bei dem bekannten Spurlager wird durch die Bohrungen im Spurring der Ölkreislauf über den Kühler ständig aufrechterhalten, um eine zu starke Erwärmung des dem Lagerspalt zufließenden Öles zu vermeiden. Die Bohrungsdurchmesser und ihre Anzahl bestimmen dabei die geförderte Ölmenge. Das aus den Bohrungen austretende Öl spritzt in einzelnen Strahlen in den Ringkanal des stehenden Teiles hinein, wodurch allerdings dort Verwirbelungen und somit Druckverluste entstehen. Von dem Ringkanal wird das Öl dann über Rohrleitungen dem Kühler zugeführt.

Der Erfindung liegt die Aufgabe zugrunde, ein selbstpumpendes Spurlager in einfacher Weise so zu gestalten, daß die geförderte Ölmenge einstellbar ist und der Übergang von den rotierenden Pumpbohrungen in den feststehenden Ringkanal möglichst verlustarm verläuft.

Zur Lösung dieser Aufgabe ist bei einem selbstpumpenden Spurlager der eingangs beschriebenen Art benachbart zur äußeren Mantelfläche des Spurringes in diesem ein umlaufender Kanal angeordnet, in den die Bohrungen einmünden, und dieser umlaufende Kanal ist auf der dem stehenden Teil zugewandten Seite bis auf einen Spalt durch einen höhenverstellbaren, am Spurring gehaltenen Ring begrenzt. Bei diesem Spurlager erfolgt durch den am radial äußeren Rand des Spurringes angeordneten umlaufenden Kanal die Verteilung des Öles auf einen den gesamten Umfang des Spurringes umfassenden Film bereits im rotierenden Spurring des Tragkopfes. Die Abgabe des Öles in den Ringkanal des feststehenden Teiles erfolgt somit ebenfalls entlang des gesamten Umfanges. Dadurch werden Verwirbelungen und Turbulenzen vermieden und der Übergang ist verlustarm. Durch entsprechende Wahl der Spaltbreite, die kontinuierlich auf einfachste Weise durch den höhenverstellbaren Ring einstellbar ist, läßt sich die geförderte Ölmenge in gewünschter Weise regulieren.

Es ist besonders vorteilhaft, wenn die einander gegenüberstehenden Stirnflächen vom Spurring und vom höhenverstellbaren Ring und die dieser Öffnung gegenüberstehenden Begrenzungswände des Ringkanals im stehenden Teil fortlaufend konisch auseinanderlaufen. Dadurch erhält sowohl die Öffnung am Spurring als auch die dieser gegenüberstehende Öffnung des Ringkanals im stehenden Teil eine Düsenform, so daß sich für das vom rotierenden Teil, nämlich dem Spurring, auf den stehenden Teil übertretende Öl eine laminare Strömung ergibt. Dadurch werden die beim Übertritt möglichen Verluste noch weiter gesenkt.

Weiterhin ist es zweckmäßig, die Befestigung des höhenverstellbaren Ringes am Spurring mit parallel zur Welle verlaufenden Schrauben vorzunehmen. Die Einstellung der Spaltbreite kann dann vorgenommen werden, ohne daß der vor der Spaltöffnung liegende stehende Teil mit dem Ringkanal demontiert werden muß.

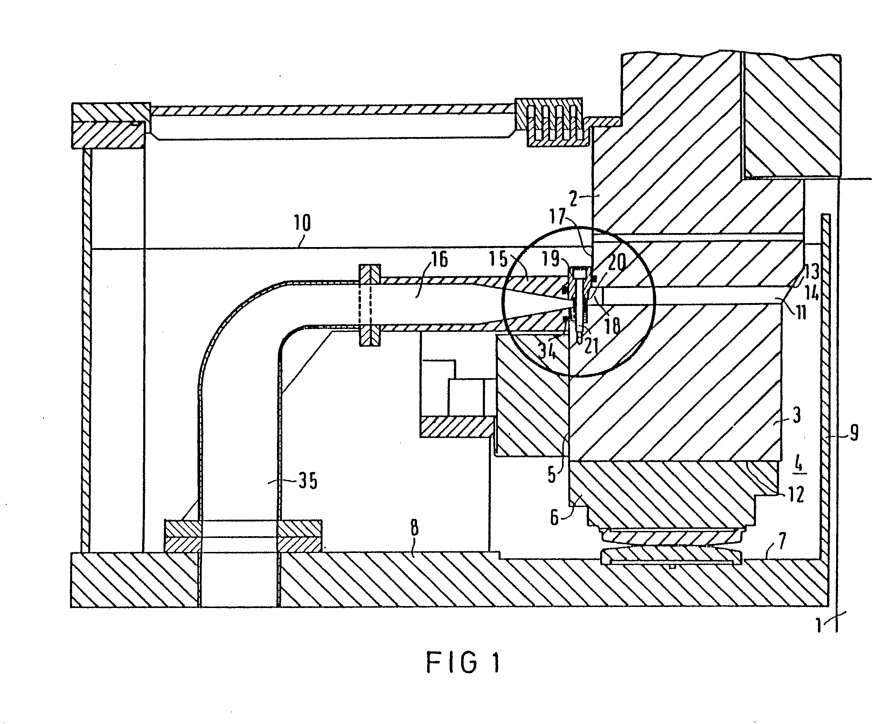

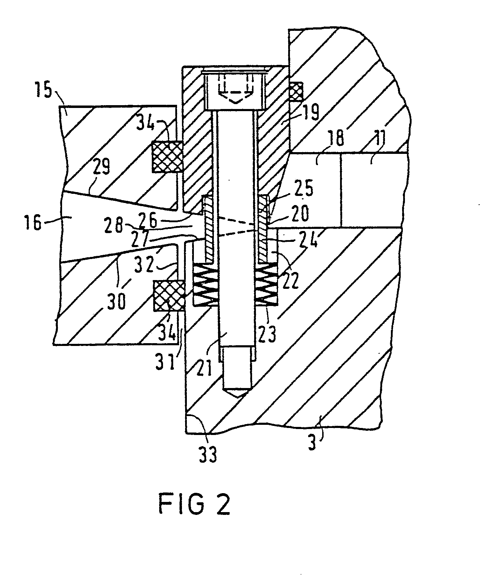

Im folgenden sei die Erfindung noch anhand des in den Figuren 1 und 2 der Zeichnung dargestellten Ausführungsbeispiels näher erläutert. Fig. 1 zeigt einen Radialschnitt durch ein gemäß der Erfindung ausgebildetes selbstpumpendes Spurlager. Fig. 2 zeigt in vergrößertem Maßstab die in Fig. 1 mit einem Kreis umrandete Einzelheit.

Die vertikale Welle 1 eines Wasserkraftgenerators wird über den Tragkopf 2 mit dem Spurring 3 von dem selbstpumpenden Spurlager getragen, das aus einem Traglager 4 und einem Führungslager 5 besteht. Das Traglager 4 besteht aus einzelnen Spursegmenten 6, die in bekannter Weise auf dem Boden 7 des Spurlagertopfes 8 einstellbar gelagert sind.

Der Spurlagertopf 8 schließt mit der Wand 9 gegen die vertikale Welle 1 ab und ist bis zum Ölspiegel 10 mit Öl gefüllt, das zur Kühlung und Schmierung des Lagers dient.

Zur Ermöglichung eines ständigen Ölumlaufs ist der umlaufende Spurring 3 mit radialen Bohrungen 11 versehen, die beim Umlaufen des Spurringes 3 nach Art einer Kreiselpumpe eine Pumpenwirkung hervorrufen und das Öl, das beim Durchtritt durch den Lagerspalt 12 erwärmt wird, aus den vor den Öffnungen 13 der Bohrungen 11 liegenden Ansaugraum 14 ansaugt und zu dem im stehenden Teil 15 angeordneten Ringkanal 16 fördert.

Damit der Übertritt des Öles von dem rotierenden Spurring 3 auf den stehenden Teil 15 möglichst verlustarm erfolgt, münden die Bohrungen 11 in einen am radial außenliegenden Rand 17 des Spurringes 3 angeordneten umlaufenden Kanal 18 ein. Dort verteilt sich also bereits im rotierenden Spurring 3 das durch die Bohrungen 11 geförderte Öl über den gesamten äußeren Umfang des Spurringes. Der umlaufende Kanal 18 ist durch einen höhenverstellbaren Ring 19 bis auf einen Spalt 20 verschlossen. Dieser Ring 19 ist durch parallel zur Welle 1 verlaufende Schrauben 21 am Spurring 3 befestigt, wobei in einem Sackloch 22 eine Druckfeder 23 und eine Hülse 24 angeordnet sind, welche die Schraube 21 umgeben, derart, daß die Hülse 24 in eine entsprechende Bohrung 25 an der unteren Stirnfläche 26 des Ringes 19 eingreift. Durch mehr oder weniger tiefes Einschrauben der Schraube 21 in den Spurring 3 wird somit die Breite des Spaltes 20 für den Austritt des Öles aus dem umlaufenden Kanal 18 eingestellt.

Die einander gegenüberliegenden Stirnfläche 27 des Spurringes 3 und die untere Stirnfläche 26 des höhenverstellbaren Ringes 19 laufen konisch auseinander. Auch die dieser Öffnung 28 gegenüberstehenden Begrenzungswände 29 und 30 des Ringkanals 16 im stehenden Teil 15 laufen zunächst mit entsprechender Neigung fortlaufend konisch auseinander, bis sie in einen Bereich mit parallelen Begrenzungswänden münden. Der Spalt 31 zwischen der inneren Mantelwand 32 des stehenden Teiles 15 und der äußeren Mantelwand 33 des Spurringes 3 ist außerdem durch zwei Dichtringe 34 abgedichtet, um einen Austritt von Lecköl durch diesen Spalt 31 zu verhindern.

Das von den Bohrungen 11 geförderte Öl, das sich im umlaufenden Kanal 18 über den gesamten Umfang des rotierenden Spurringes 3 verteilt, tritt über die düsenförmig ausgebildete Öffnung 28 in einer weitgehend laminaren Strömung in den Ringkanal 16 im stehenden Teil 15 über. Dieser Übertritt ist dadurch weitgehend verlustarm. Aus dem Ringkanal 16 wird das Öl danach über eine Leitung 35 zu den nicht dargestellten Kühlern geführt und dann auf ebenfalls nicht dargestellten Wegen wieder den Spursegmenten 6 gekühlt zugeleitet.

## Patentansprüche

1. Selbstpumpendes Spurlager für elektrische Maschinen mit vertikaler Welle (1), insbesondere für Wasserkraftgeneratoren, bei dem der Ölumlauf durch im umlaufenden Spurring (3) vorgesehene, zumindest annähernd radial verlaufende Bohrungen (11) hervorgerufen ist, die das Öl aus einem oberhalb des Lagerspaltes radial innen befindlichen Ansaugraum (14) absaugen und in einen in einem stehenden Teil (15) des Spurlagertopfes (8) angeordneten Ringkanal (16) überleiten, von dem aus es Kühlern und danach wieder dem Ölansaugraum (14) zugeführt wird, wobei in dem Spalt (20) zwischen der äußeren Mantelfläche des Spurringes (3) und dem stehenden Teil (15) mit dem Ringkanal Dichtungsmittel vorgesehen sind, dadurch gekennzeichnet, daß benachbart zur äußeren Mantelfläche (33) des Spurringes (3) in diesem ein umlaufender Kanal (18) angeordnet ist, in den die Bohrungen (11) münden, und daß dieser umlaufende Kanal (18) auf der dem stehenden Teil (15) zugewandten Seite bis auf einen Spalt (20) durch einen höhenverstellbaren, am Spurring (3) gehaltenen Ring (19) begrenzt ist.

2. Selbstpumpendes Spurlager nach Anspruch 1, dadurch gekennzeichnet, daß die einander gegenüberstehenden Stirnflächen (26, 27) vom Spurring (3) und vom höhenverstellbaren Ring (19) und die dieser Öffnung (28) gegenüberstehenden Begrenzungswände (29, 30) des Ringkanals (16) im stehenden Teil (15) fortlaufend konisch auseinanderlaufen.

3. Selbstpumpendes Spurlager nach Anspruch 1, dadurch gekennzeichnet, daß die Befestigung des höhenverstellbaren Ringes (19) am Spurring (3) mit parallel zur Welle (1) verlaufenden Schrauben (21) erfolgt.

4. Selbstpumpendes Spurlager nach Anspruch 3, dadurch gekennzeichnet, daß die Schrauben (21) eine auf Druckfedern (23) liegende Hülse (24) durchsetzen, die unten an dem höhenverstellbaren Ring (19) anliegt.

## Claims

1. A self-pumping thrust bearing for vertical-shaft (1) electrical machines, in particular water-driven generators, in which the oil circulation is produced by bores (11) which extend at least approximately radially and are arranged in the rotating thrust ring (3), and which bores suck the oil from a radially inner suction space (14) above the bearing gap and transfer it into an annular channel (16) which is arranged in a stationary part (15) of the thrust bearing container (8) and from which the oil is fed to coolers and subsequently returned to the oil suction space (14), sealing means being arranged in the gap (20) between the outer surface of the thrust ring (3) and the stationary part (15) having the annular channel, characterised in that a peripheral channel (18) is arranged adjacent to the outer surface (33) of the thrust ring (3) within the latter, into which channel the bores (11) open ; and that at the side facing the stationary part (15), except for a gap (20), the peripheral channel (18) is bounded by a vertically adjustable ring (19) which is secured to the thrust ring (3).

2. A self-pumping thrust bearing as claimed in Claim 1, characterised in that the mutually opposite end faces (26, 17) of the thrust ring (3) and the vertically adjustable ring (19) and the boundary walls (29, 30) of the annular channel (16), which are opposite the opening (28), diverge continuously in the stationary part (15) in conical fashion.

3. A self-pumping thrust bearing as claimed in Claim 1, characterised in that the fastening of the vertically adjustable ring (19) to the thrust ring (3) is effected by means of screws (21) which run parallel to the shaft (1).

4. A self-pumping thrust bearing as claimed in Claim 3, characterised in that the screws (21) pass through a sleeve (24) which is arranged on compression springs (23) and which rests against the vertically adjustable ring (19) at the bottom.

## Revendications

1. Palier de butée à auto-circulation du lubrifiant pour des machines électriques à axe vertical (1), en particulier pour des génératrices hydrauliques, dans lequel la circulation de l'huile est provoquée par des perçages (11) ménagés dans la bague de la butée (3) au moins approximativement dans le sens radial et aspirant de l'huile dans une chambre d'aspiration (14) située radialement vers l'intérieur et au-dessus de la fente du palier, pour la faire passer dans un canal annulaire (16) ménagé dans un élément fixe (15) du pot (8) du palier de butée, et à partir duquel elle est envoyée à des refroidisseurs et ensuite, à nouveau, dans la chambre d'aspiration (14) de l'huile, des moyens d'étanchéité étant prévus dans la fente (20) située entre la surface latérale extérieure de la bague de butée (3) et l'élément fixe (15) à canal annulaire, caractérisé par le fait que dans le voisinage de la surface latérale extérieure (33) de la bague de butée (3), un canal périphérique (18) est ménagé dans cette dernière, canal dans lequel débouchent les perçages (11), et que ce canal périphérique (18) est limité, du côté voisin de l'élément fixe (15), à une fente (20), au moyen d'une bague (19) déplaçable en hauteur et maintenue sur la bague de butée (3).

2. Palier de butée à auto-circulation du lubrifiant selon la revendication 1, caractérisé par le fait que les surfaces frontales (26, 27) de la bague de butée (3) et de la bague (19) réglable en hauteur, et qui se font face, et les parois de limitation (29, 30) du canal annulaire (15) ménagées dans l'élément fixe (15), parois qui font face à cette ouverture (28), s'éloignent l'une de l'autre de façon conique et continue.

3. Palier de butée à auto-circulation selon la revendication 1, caractérisé par le fait que la fixation de la bague (19), réglable en hauteur, sur la bague de butée (3), a lieu à l'aide de vis (21) qui s'étendent parallèlement à l'arbre (1).

4. Palier de butée à auto-circulation du lubrifiant selon la revendication 3, caractérisé par le fait que les vis (21) passent par une douille (24) qui repose sur des ressorts de pression (23), ladite douille portant contre la bague (19) susceptible d'être réglée en hauteur.

FIG 1

FIG 2